Europäisches Patentamt

European Patent Office

Office européen des brevets

(19)

(11) Publication number: **0 088 805**

**A1**

(12)

# EUROPEAN PATENT APPLICATION

published in accordance with Art. 158(3) EPC

(21) Application number: **82902827.3**

(22) Date of filing: **22.09.82**

Data of the international application taken as a basis:

(86) International application number:
**PCT/JP82/00380**

(87) International publication number:
**WO83/01128 (31.03.83 83/08)**

(51) Int. Cl.³: **G 05 B 19/02**

(30) Priority: **22.09.81 JP 149820/81**

(43) Date of publication of application:
**21.09.83 Bulletin 83/38**

(84) Designated Contracting States:
**DE FR GB**

(71) Applicant: **Fanuc Ltd**
**5-1, Asahigaoka, 3-chome**
**Hino-shi, Tokyo 191(JP)**

(72) Inventor: **ISOBE, Shinichi**
**Hinodai-Haitsu 516 1-1-1, Hinodai**
**Hino-shi Tokyo 191(JP)**

(72) Inventor: **YONEKURA, Mikio**
**3-27, Tamadaira Hino-shi**
**Tokyo 191(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) PROGRAMMABLE SEQUENCE CONTROLLER.

(57) A programmable sequence controller which can control flexibly by providing a position control function in addition to the sequence processing function in a numerical control system. A programmable sequence controller (2) outputs commands from a numerical controller (1) via a data input/output unit (202d) and a transceiver (202g) to a machine tool (3), and also outputs signals from the machine tool (3) to the controller (1). A position control circuit (203) is connected by a bus line (202h) to a processor (202f), and the rotational position of the tool magazine, etc., of the machine tool (3) is controlled directly by commands from the processor.

Fig. 6

EP 0 088 805 A1

-1-

## DESCRIPTION

PROGRAMMABLE SEQUENCE CONTROLLER

Technical Field

This invention relates to a programmable sequence controller disposed between a numerical control device and a machine tool for executing predetermined sequence processing in accordance with a sequence program. More particularly, the invention relates to a programmable sequence controller which incorporates a position control function.

Background Art

In a numerical control system, various mechanical elements in machine tools are controlled on the basis of commands issued by a numerical control device (including an operator's panel). Heretofore, in such numerical control systems, a power sequence circuit comprising a multiplicity of relays has been interposed between the numerical control device (hereinafter referred to as an NC device) and the machine tool. Prescribed ones of these relays are actuated in response to NC commands (M- and S-function instructions and commands from the operator's panel), whereby the mechanical elements are caused to operate in accordance with the NC the commands.

However, the conventional systems of the above type are large in size and are high in cost owing to the requirement for the large number of relays. They are also poor in reliability owing to mechanical failure of the relays and the like.

Accordingly, a sequence controller (referred to as a programmable sequence controller, abbreviated to PSC device) is now the most widely used means for performing, through program processing, the function of the magnetics unit. The conventional PSC device, though it does have the sequence processing function, does not possess a position control function. Therefore, in order to execute the sequence processing for, say, automatic changing of tools by the PSC device, a position control circuit for controlling the rotational position of a magazine accommodating a plurality of tools is connected to the PSC device through a data input/output interface, and the PSC device applies a stopping position command to the position control circuit through the input/output interface to rotate the magazine under the control of the position control circuit, thereby positioning a new tool at a predetermined location.

The conventional system is disadvantageous, however, in that there is a restriction upon the exchange of data owing to a large number of input and output signals, and in that acceleration/deceleration control and highly precise positioning control are not feasible. In addition, with the conventional system, the position control circuit connected to the PSC device is designed in accordance with the particular circumstances, namely whether tool indexing is to be performed by rotating a magazine or whether another form of position control is to be carried out. Thus, the position control circuit is designed in accordance with the object to be positionally controlled. Accordingly, devising the design is troublesome and flexible position control tailored to the user's needs is not possible. Furthermore, cost is considerable even if the position control circuit is constructed less expensively.

Accordingly, an object of the present invention is to provide a programmable sequence controller (PSC device) which is low in cost and capable of acceleration/deceleration control and of highly precise positioning, and with which flexible control tailored to the needs of users is possible without requiring that a position control circuit be redesigned in accordance with the object to be positionally controlled.

Disclosure of the Invention

Disclosed is a programmable sequence controller (PSC device) disposed between a numerical control device and a machine tool for executing sequence processing based on an internal sequence program, whereby a signal conforming to a command from the numerical control device is delivered as an output to the machine side through a data input/output unit and a signal entered from the machine side is applied as an input to the numerical control device. The programmable sequence controller incorporates a position control function and has a position control circuit that is connected to a processing unit of the sequence controller through a bus line, the arrangement being such that the position control circuit is controlled directly by the processing unit without the intervention of the data input/output unit. According to the disclosed PSC device, acceleration/deceleration control and highly accurate positioning can be performed at low cost, and position control tailored to the needs of users can be achieved without any modification in design.

Brief Description of the Drawings

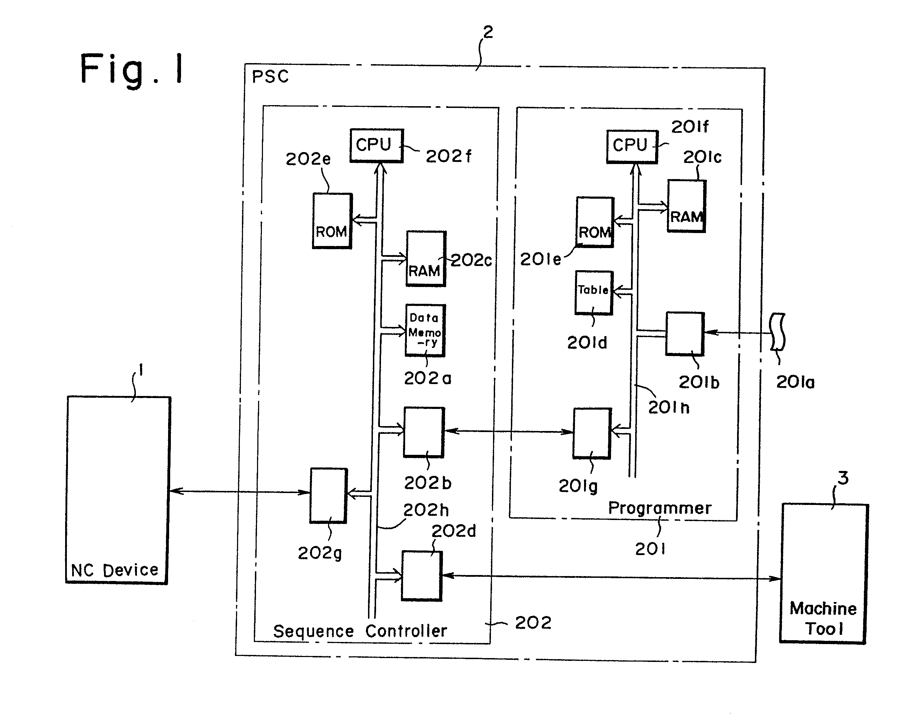

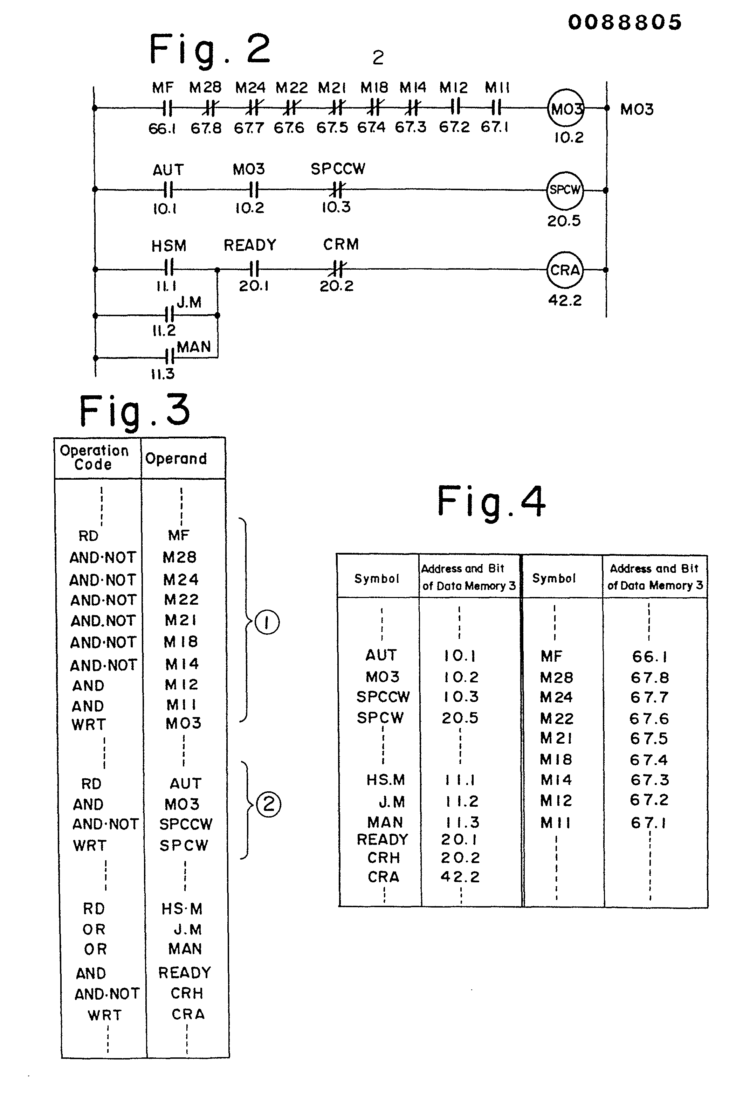

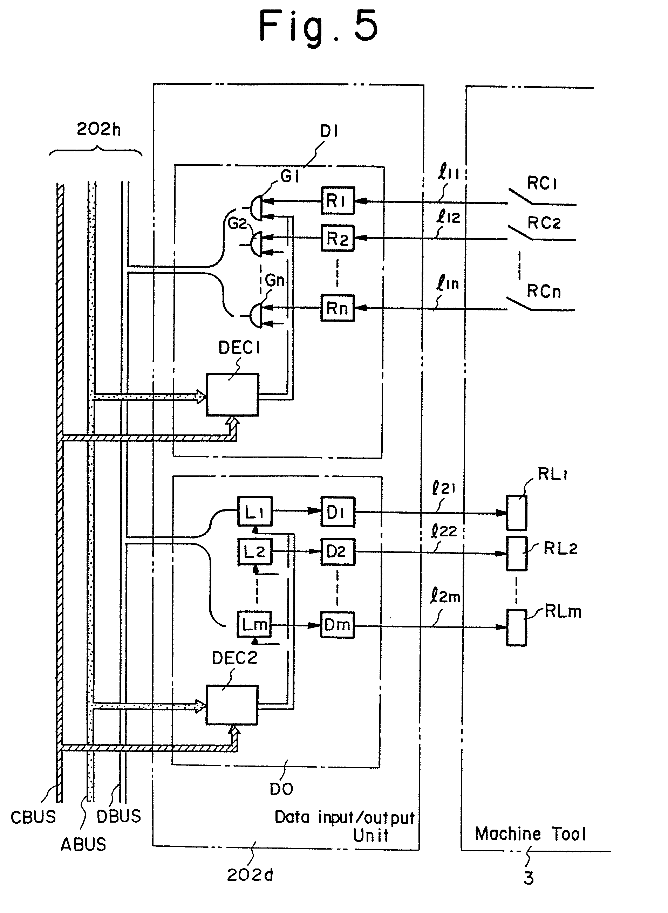

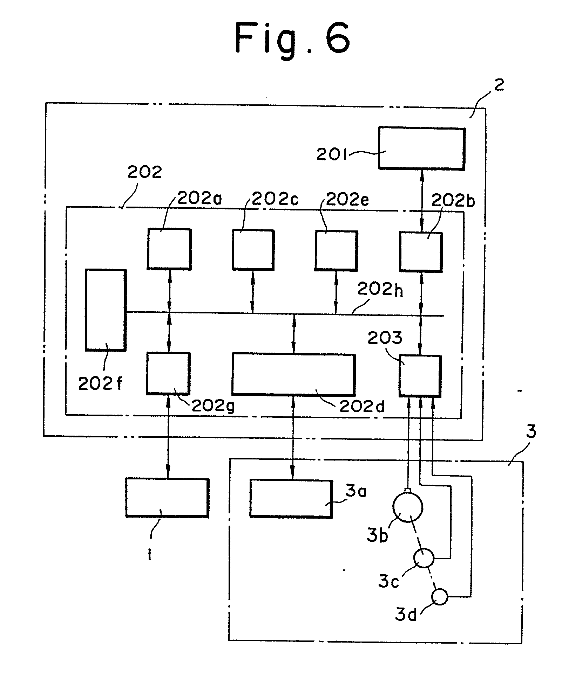

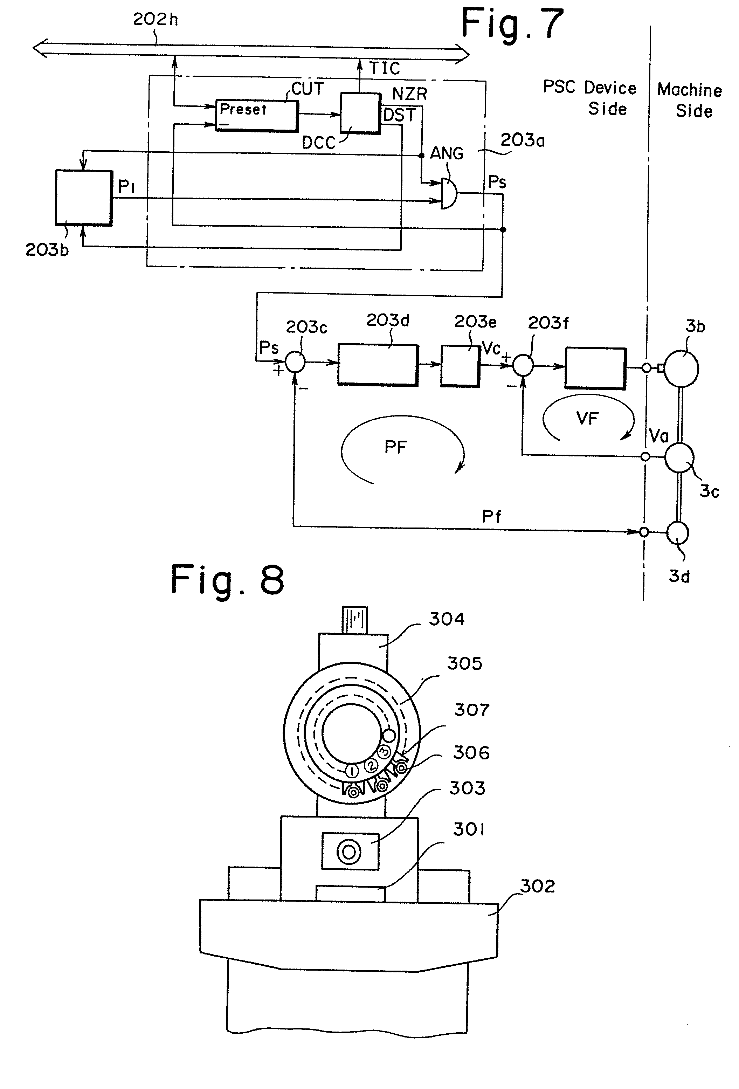

Figs. 1 through 5 are explanatory views of a programmable sequence controller, in which Fig. 1 is a block diagram of a programmable sequence controller, Fig. 2 is a ladder diagram which is part of a power magnetics circuit, Fig. 3 is an explanatory view of a sequence program, Fig. 4 is an explanatory view showing the stored contents of a table for storing the corresponding relationship between symbols, used as operands, and the storage locations of a data memory, and Fig. 5 is a detailed view of a data input/output unit; Fig. 6 is a view showing the construction of a PSC device according to the present invention; Fig. 7 is a block diagram of a position control circuit incorporated in a PSC device according to the present invention; and Fig. 8 is a front view of a horizontal

-5-

machining center.

Best Mode for Carrying Out the Invention

In Fig. 1, numeral 1 denotes a numerical control device, 2 a PSC device installed separately of the numerical control device 1, and 3 a machine tool. The PSC device 2 includes a programmer 201 for converting an input sequence program into machine language and for correcting the sequence program, a sequence controller proper 202, and the like.

In the programmer 201, numeral 201a denotes a paper tape bearing a sequence program in punched form, 201b a paper tape reader, and 201c a random access memory (referred to as a RAM) for storing the sequence program. A sequence program performs the function of a power magnetics circuit, expressing the function thereof in logical form using operation codes and operands which make up a program. By way of example, a ladder diagram constituting part of a power magnetics circuit shown in Fig. 2 may be programmed as depicted in Fig. 3. It should be noted that RD, AND, WRT, OR, AND·NOT, etc. in the sequence program are operation codes. RD is a read operation instruction, AND a logical product instruction, WRT a write operation instruction, OR a logical sum instruction, and AND·NOT an instruction for logical multiplication with a negated value. Further, MF, M28,..., AUT, M03... are operands and correspond to prescribed addresses and prescribed bits in a data memory 202a, described below, located within the sequence controller proper 202. The PSC device, based on the group of instructions ① of the sequence program, executes the following logical operation:

$$MF \cdot \overline{M28} \cdot \overline{M24} \cdot \overline{M22} \cdot \overline{M21} \cdot \overline{M18} \cdot \overline{M14} \cdot M12 \cdot M11$$

and plants the result of the operation (either "1" or "0") in the data memory 202a at the prescribed bit of the prescribed address corresponding to operand M03. The PSC device also executes the following operation based on the group of instructions ②:

$$AUT \cdot M03 \cdot \overline{SPCCW}$$

and plants the result of the operation in the data memory 202a at the prescribed bit of the prescribed address designated by the operand SPCW.

Returning to Fig. 1, numeral 201 denotes a table for storing the corresponding relationships between the symbols MF, AUT... constituting the operands of the sequence program, and storage locations of the data memory 202a. An example of what is stored is illustrated in Fig. 4 Specifically, the symbol AUT corresponds to the first bit of the tenth address of the data memory 10, symbol M03 corresponds to the second bit of the tenth address and so on, with symbol CRA corresponding to the second bit of the 42nd address. The ladder diagram of Fig. 2 also shows the symbols matched with the corresponding storage locations. Numeral 201e denotes a read-only memory (ROM) for storing, e.g., a control program for controlling the overall programmer 201, as well as a language translator program for translating the sequence program, entered from the paper tape 201a, into machine language. Numeral 201f designates a central processing unit (CPU) for executing, e.g., translation and correction of the sequence program in accordance with the program stored in the ROM 201e. Numeral 201g represents a transceiving unit having a buffer or the like for sending data to and receiving data from the sequence controller proper 202. Numeral 201h denotes a bus line.

In the sequence controller proper, numeral 202a denotes the data memory. The data memory 202a establishes correspondence between each relay of the power magnetics circuit shown in Fig. 2 and a single bit, the on/off state of a relay being represented by logical "1" or logical "0", respectively. For example, assume that the automatic mode is commanded from the operator's panel. With a power magnetics circuit, the relay AUT is turned on. With the PSC device, however, "1" is stored in the first bit of the tenth address in data memory 202a. Numeral 202b represents a transceiving unit having a buffer or the like for supervising the transmission and reception of data with the programmer 201, 202c a RAM for storing the sequence program translated into machine language by the programmer 201, 202d a data input/output unit for supervising the transmission and reception of data with the machine tool 3, 202e a ROM for storing the control program which controls the overall sequence controller proper 202, 202f a central processing unit for executing prescribed sequence processing in accordance with the control program and sequence program, and 202g a transceiving unit for sending data to and receiving data from the NC device 1.  Numeral 202h denotes a bus line.

Fig. 5 is a detailed view of the data input/output unit 202d.  DI represents a data input circuit having receivers $R_1$ through $R_n$ which receive signals from, e.g., various limit switches and relay contacts $RC_1$ through $RC_n$ sent from the machine side, AND gates $G_1$ through $G_n$, and a decoder $DEC_1$ which decodes address signals received from an address bus ABUS to open predetermined ones of the AND gates, the AND gate output being sent out on the data bus DBUS.

DO represents a data output circuit having flip-flops (or latch circuits if desired) $L_1$ through $L_m$ for storing such signals as forward and reverse spindle rotation signals delivered to the machine 3, drivers $D_1$ through $D_m$ provided for corresponding ones of the flip-flops (referred to as FFs hereinafter) $L_1$ through $L_m$ for delivering the output signals from the FFs to the machine tool 3 to actuate relays $RL_1$ through $RL_m$, and a decoder $DEC_2$ which decodes address signals received from the address bus ABUS to place predetermined ones of the FFs in a settable or resettable state, and which stores in predetermined FFs the data received from the data bus DBUS.  Further, CBUS denotes a control signal bus for sending and receiving control signals, ABUS represents the address bus, and DBUS the data bus.  Also, $l_{11}$ through $l_{1n}$ and $l_{21}$ through $l_{2m}$ denote cables interconnecting the data input/output unit 202d and the machine tool so that data may be sent and received between them.

The PSC device 2 operates in the following manner.

First, a table showing the correspondence between symbols and storage locations is prepared while referring to the ladder diagram (Fig. 2) of the power magnetics circuit, and the table is punched in a paper tape.  A sequence program also is prepared using operation codes and symbols (operands) and is similarly punched into the paper tape 201a.

Next, the paper tapes 201a are read by the paper tape reader 201b to store the correspondence table in table 201d and the sequence program in the RAM 201c. When the storage of the correspondence table and sequence program has been accomplished, the PSC device 2 starts executing the language processing program stored in the ROM 201e, reads the instructions in the sequence program out of the RAM 201c in successive fashion and converts the operation codes and operands into machine language.  Each operand is converted into a machine word representing a prescribed address and bit of the data memory 202a. The sequence program converted into these machine words is transferred to and stored in the RAM 202c through the transceiver unit 201g of the programmer 201 and the transceiver unit 202b of the sequence controller proper 202. Through the foregoing, the programmable sequence controller 2 becomes capable of executing sequence processing. Thereafter, in accordance with the control program, the CPU 202f reads the sequence program instructions successively out of the RAM 202c one instruction at a time, executes sequence processing steps one at a time from the first to the last instructions of the sequence program and, when processing of the last instruction is completed, returns to the first instruction of the sequence program. Thus the PSC device 2 repeatedly performs the processing of the sequence program instructions in cyclic fashion.

Now assume that, say, a command (M03) for forward spindle rotation is issued by the NC device 1. When this takes place, logical "1" is written into the bits (see Fig. 4, specifically the first bit of the 66th address and the first and second bits of the 67th address) of the data memory 202a where the M-function MF and the M-code signal M11 are to be stored.

Since the CPU 202f is executing sequence processing by repeatedly reading the instructions of the sequence program in cyclic fashion as described above, "1" will be stored in the fifth bit of the 20th address of data memory 202a when the groups of instructions ①, ② in the sequence program (Fig. 3) have been executed. Thereafter, the status (SPCW = "1") of the fifth bit at the 20th address is stored in, say, FF $L_1$ of the data output circuit DO (Fig. 5) and is delivered to the machine tool 3 through the driver $D_1$ and cable $\ell_{21}$. As a result, the relay $RL_1$ of the machine tool 3 is turned ON so control for forward spindle rotation is carried out. If the spindle is rotating in the forward direction, the relay contact $RC_1$, for example, is turned ON and a forward rotation end signal is stored in a prescribed bit of the data memory 202a (Fig. 1) through the cable $\ell_{11}$, receiver $R_1$, AND gate $G_1$ and data bus DBUS. Thereafter, sequence program execution continues and the NC device 1 is informed of completion of the forward rotation operation. This ends the sequence processing for forward rotation of the spindle.

Fig. 6 is a simplified block diagram of a system using the PSC device of the present invention, the device being equipped with a position control function. Portions similar to those of Fig. 1 are designated by like reference characters are a detailed description thereof is deleted. In Fig. 6, numeral 1 denotes the NC device, 2 the PSC device and 3 the machine tool. Numeral 203 designates a position control circuit in the form of an LSI. Numeral 3a denotes a power magnetics circuit on the machine side, 3b a motor for rotating a magazine, 3c a tachogenerator for producing an actual speed voltage Va conforming to the rotational speed of the motor, and 3d a pulse coder for producing a pulse Pf each time the motor rotates through a prescribed angle. Fig. 7 is a block diagram of the position control circuit 203, in which 203a represents a pulse generating circuit, and 203b an accelerating/decelerating for accelerating and decelerating the pulse rate of command pulses Ps at rise time and fall time, respectively, the command pulses Ps being generated by the pulse generating circuit 203a. The pulse generating circuit 203a has a counter CNT in which an amount of movement is set, the contents of the counter being decremented by one step each time a command pulse Ps is generated, a discriminating circuit DCC which discriminates the contents of the counter CNT for generating a signal NZR when the counter contents are non-zero, and a deceleration start signal DST when the counter contents (namely the remaining amount of movement) become equivalent to a deceleration distance, and an AND gate ANG which opens when the contents of the counter CNT are non-zero to deliver, as the command pulses Ps, the pulses produced by the accelerating/decelerating circuit 203b. The accelerating/decelerating circuit 203b generates acceleration pulses from a built-in oscillator when the signal NZR is a "1", and deceleration pulses from the oscillator when the signal DST is a "1". Numeral 203c designates an arithmetic circuit for computing the difference between the

command pulses Ps and the feedback pulses Pf, 203d an error register for storing the difference between the number of command pulses Ps and the number of feedback pulses Pf, 203e a DA conversion circuit for producing, as a speed command voltage Vc, an analog voltage proportional to the contents of the error register 203d, 203f an arithmetic circuit for computing the difference between the speed command voltage Vc and the actual speed voltage Va, and 203g a speed control circuit. PF represents a position feedback loop, and VF a speed feedback loop.

Described next will be a case where a horizontal spindle machining center illustrated in Fig. 8 has its tools indexed by the system shown in Fig. 6. In Fig. 8, numeral 301 denotes a table on which a workpiece is placed, 302 a base for transporting the table 301 in X, Y and Z directions, 303 a spindle head for receiving a tool, 304 a main column, 305 a magazine, moved vertically along the main column 304, for rotating a plurality of tools 306, and 307 a gripping member for gripping the arbor of a corresponding tool 306. A tool change is performed by rotating the magazine 305 to bring a desired tool 306 into position directly above the spindle head 303, and subsequently lowering the magazine 305 to situate the arbor in front of the spindle head. This is followed by thrusting the spindle head 303 forward so that the arbor is received in a chuck located at the tip of a rotary shaft of the spindle head 303. In this condition the magazine 305 is raised, whereby the tool 306 gripped by the gripping member 307 is removed from the gripping member 307 to be loaded into the spindle head 303.

Sequence control instructions for automatic changing of tools, inclusive of a tool indexing function, are already stored in the RAM 202c of the sequence controller proper 202 (see Fig. 6). Therefore, when a tool change command $T_{\square \, \square}$ is issued by the NC device 1, the sequence controller proper 202, based on the sequence program, computes the difference between the present position of the magazine 305 and the new tool position, and applies the difference to the pulse generating circuit 203a (see Fig. 7) of the position control circuit 203. The difference (amount of movement) is set in the counter CNT, as a result of which the signal NZR goes to logical "1". In response, the accelerating/decelerating circuit 203b generates acceleration pulses Pi of gradually increasing pulse rate, these being delivered via the AND gate AND as the command pulses Ps. The contents of the counter CNT are decremented by one step each time a command pulse Ps is generated.

The command pulses Ps generated by the pulse generating circuit 203a are accumulated in the error register 203d via the arithmetic circuit 203c, as a result of which the DA converter 203e generates the speed command voltage Vc. In response, the magazine

-15-

drive motor 3b begins to rotate with a predetermined delay, causing the speed detector 3c to generate the actual speed voltage Va. Each time the magazine drive motor 3b rotates through a predetermined angle, the pulse coder 3d generates a feedback pulse Pf which decrements the contents of the error register 203d. Specifically, the position feedback loop PF exercises position control in such a manner that the positional error (the difference between the command pulses Ps and feedback pulses Pf) approaches zero. Then, just as described above, the contents of the error register 203d are DA converted for delivery as the speed command voltage Vc, the arithmetic circuit 203f computes the difference between this output and the actual speed voltage Va, and the motor 3b is rotated by the speed conrol circuit 203g so that the speed error will approach zero. Thus, the speed feedback loop VF executes speed control in such a manner that the speed error approaches zero. The motor 3b will subsequently arrive at a fixed speed after a predetermined length of time, in which steady state the contents (steady deviation) of the error register 203d will be held fixed.

When the contents of the counter CNT attain a value conforming to a preset deceleration distance, the discriminating circuit DCC generates the deceleration signal DST, so that the rate of the pulses Pi produced by the accelerating/decelerating circuit 203b gradually decreases toward zero. As a result, the rotational speed of the motor 3b diminishes and the contents of the counter CNT become zero. When this occurs, namely when the new tool accommodated in the magazine is positioned directly above the spindle 303, the motor 3b comes to rest, completing control for indexing the new tool.

When the new tool has been positioned directly above the spindle 303, the discriminating circuit of the position control circuit 203 generates a signal TIC indicating completion of the new tool indexing operation. When the new tool indexing complete signal TIC is read into the processor 202f through the bus line, the processor 202f then executes processing, based on the sequence program, for lowering the magazine, thrusting the spindle head forward, raising the magazine and retracting the spindle head, thereby completing the tool change sequence processing.

Thus, according to the present invention, (a) the position control circuit 203 is connected directly to the processor 202f of the programmable sequence controller proper 202, without the intervention of the data input/output unit 202d, (b) the position control circuit 203, in the form of an LSI, is incorporated within the sequence controller, and (c) the position control circuit 203 has the same construction as a speed control circuit for the feed motor which drives a table or the like.

As a result, the PSC device executes position control equivalent to the control of axes performed by an NC device, and makes it possible to achieve acceleration/deceleration control, accurate positioning and flexible control tailored to the needs of users. In addition, complex circuitry can be provided inexpensively by presently available IC techniques. Moreover, the complex position control circuit 203 having the position and speed feedback circuits is formed collectively on a printed circuit board together with the conventional PSC device. Consequently, costs are lowered in comparison with a case where a position control circuit is provided separately.

CLAIMS:

1.  In a programmable sequence controller disposed between a numerical control device and a machine tool for executing sequence processing based on an internal sequence program, whereby a signal conforming to a command from the numerical control device is delivered as an output to the machine side through a data input/output unit and a signal entered from the machine side is applied as an input to the numerical control device, a programmable sequence controller having a position control function, characterized in that a position control circuit is connected to a processing unit of the sequence controller through a bus line, and the position control circuit is controlled directly by said processing unit.

2.  A programmable sequence controller according to claim 1, characterized by being mounted, inclusive of the position control circuit, on a single circuit board.

3.  A programmable sequence controller according to claim 1 or claim 2, characterized in that said position control circuit has an acceleration/deceleration circuit, a position feedback loop and a speed feedback loop.

Fig. I

PSC 2

CPU 201f

CPU 202f

ROM 202e

RAM 202c

Data Memo-ry 202a

RAM 201c

ROM 201e

Table 201d

201b

201a

201h

202b

201g

202g

202h

202d

NC Device 1

Programmer 201

Sequence Controller 202

Machine Tool 3

0088805

0088805

# Fig. 2

2

Ladder diagram:

Row 1: MF (66.1) —||—  M28 (67.8) —|/|—  M24 (67.7) —|/|—  M22 (67.6) —|/|—  M21 (67.5) —|/|—  M18 (67.4) —|/|—  M14 (67.3) —|/|—  M12 (67.2) —||—  M11 (67.1) —||—  (M03) 10.2 — M03

Row 2: AUT (10.1) —||—  M03 (10.2) —||—  SPCCW (10.3) —|/|—  (SPCW) 20.5

Row 3: HSM (11.1) —||—  READY (20.1) —||—  CRM (20.2) —|/|—  (CRA) 42.2

Branch: J.M (11.2) —||—

Branch: MAN (11.3) —||—

# Fig. 3

| Operation Code | Operand | |
|---|---|---|
| ⋮ | ⋮ | |
| RD | MF | |
| AND·NOT | M28 | |
| AND·NOT | M24 | |
| AND·NOT | M22 | |
| AND.NOT | M21 | ① |
| AND·NOT | M18 | |
| AND·NOT | M14 | |
| AND | M12 | |
| AND | M11 | |
| WRT | M03 | |
| ⋮ | ⋮ | |
| RD | AUT | |
| AND | M03 | ② |
| AND·NOT | SPCCW | |
| WRT | SPCW | |
| ⋮ | ⋮ | |
| RD | HS·M | |
| OR | J.M | |
| OR | MAN | |
| AND | READY | |
| AND·NOT | CRH | |
| WRT | CRA | |
| ⋮ | ⋮ | |

# Fig.4

| Symbol | Address and Bit of Data Memory 3 | Symbol | Address and Bit of Data Memory 3 |
|---|---|---|---|
| ⋮ | ⋮ | ⋮ | ⋮ |
| AUT | 10.1 | MF | 66.1 |
| M03 | 10.2 | M28 | 67.8 |
| SPCCW | 10.3 | M24 | 67.7 |
| SPCW | 20.5 | M22 | 67.6 |
| | | M21 | 67.5 |
| ⋮ | ⋮ | M18 | 67.4 |
| HS.M | 11.1 | M14 | 67.3 |
| J.M | 11.2 | M12 | 67.2 |
| MAN | 11.3 | M11 | 67.1 |
| READY | 20.1 | | |
| CRH | 20.2 | ⋮ | ⋮ |
| CRA | 42.2 | | |
| ⋮ | ⋮ | | |

0088805

3

# Fig. 5

4

# Fig. 6

0088805

5

Fig. 7

Fig. 8

# INTERNATIONAL SEARCH REPORT

International Application No. PCT/JP82/00380

## I. CLASSIFICATION OF SUBJECT MATTER (if several classification symbols apply, indicate all) [3]

According to International Patent Classification (IPC) or to both National Classification and IPC

Int. Cl.[3]  G05B 19/02

## II. FIELDS SEARCHED

| Minimum Documentation Searched [4] | |
|---|---|
| Classification System | Classification Symbols |
| I P C | G05B 19/02 |

| | Documentation Searched other than Minimum Documentation to the Extent that such Documents are Included in the Fields Searched [5] | |
|---|---|---|
| | Jitsuyo Shinan Koho | 1926 – 1982 |
| | Kokai Jitsuyo Shinan Koho | 1971 – 1982 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| X | JP,A, 49-121089 (Toyoda Machine Works, Ltd.) 19. November. 1974  (19.11.74) | 1 – 3 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [3] | Date of Mailing of this International Search Report [3] |
|---|---|
| December 14, 1982 (14.12.82) | December 20, 1982 (20.12.82) |

| International Searching Authority [1] | Signature of Authorized Officer [20] |
|---|---|
| Japanese Patent Office | |

Form PCT/ISA/210 (second sheet) (October 1981)